# EUROPÄISCHE PATENTSCHRIFT

(11) **EP 1 010 512 B1**
(45) Veröffentlichungstag und Bekanntmachung des Hinweises auf die Patenterteilung: **20.02.2002**
(21) Anmeldenummer: 99124295.9
(22) Anmeldetag: 06.12.1999
(51) Int. Cl.: B29C 45/50

(54) **Einspritzaggregat für eine Spritzgiessmaschine**
Injection unit for an injection moulding machine
Unité d'injection pour une machine à mouler par injection

(30) Priorität: 07.12.1998 AT 204698
(43) Veröffentlichungstag der Anmeldung: 21.06.2000
(73) Patentinhaber: ENGEL Maschinenbau Gesellschaft mbH, 4311 Schwertberg (AT)
(72) Erfinder: Eppich, Stefan, 4341 Arbing (AT)
(74) Vertreter: Hofinger, Engelbert, Dr.Dr.

(56) Entgegenhaltungen:
- EP-A- 0 870 590
- DE-A- 19 702 889
- PATENT ABSTRACTS OF JAPAN vol. 016, no. 242 (M-1259), 3. Juni 1992 (1992-06-03) -& JP 04 053719 A (FANUC LTD), 21. Februar 1992 (1992-02-21)

## Beschreibung

Die Erfindung bezieht sich auf ein Einspritzaggregat für eine Spritzgießmaschine mit einem Plastifizierzylinder und einer darin axial verschiebbar angeordneten Plastifizierschnecke, wobei der Plastifizierzylinder mit einem Gehäuse fest verbunden ist, welches an zwei gegenüberliegenden Wänden je einen parallel zur Wand verlaufenden Kurbeltrieb zur Verschiebung der Plastifizierschnecke trägt, welcher von einem an derselben Wand montierten rotierenden Motor angetrieben wird.

Bei den bekannten derartigen Einrichtungen befinden sich die Motoren zur Betätigung der Kurbeltriebe außerhalb des Gehäuses, in welchem die Kurbeltriebe angeordnet sind. Um Platz zu sparen, kann man dabei (vgl. EP 0 870 590 A2) die Motoren in Richtung der Maschinenachse anordnen. Dadurch entsteht jedoch die Notwendigkeit, ein teures Winkelgetriebe zwischen Motor und Kurbeltrieb vorzusehen.

Aufgabe der Erfindung ist es demgegenüber, eine Einrichtung zu schaffen, welche geringen Platzbedarf mit geringem konstruktiven Aufwand vereinigt. Dies wird erfindungsgemäß dadurch erreicht, daß der Motor an wenigstens einer der Wände innen befestigt ist, und die Drehachse des Motors normal zum Kurbeltrieb verläuft.

Vorzugsweise wird man bei einer derartigen Einrichtung die Kurbeltriebe an den Seitenwänden des Gehäuses anordnen und vorsehen, daß die Kurbeltriebe vertikal verlaufen und daß der Motor oberhalb der Plastifizierschnecke quer zu dieser verläuft. Dies ermöglicht es, das Ende der Plastifizierschnecke in vertikaler Richtung an einer gehäusefesten Führungs-schiene abzustützen.

Die kompakteste Ausführung der erfindungsgemäßen Einrichtung erhält man, wenn wenigstens ein Motor vorgesehen ist, der an beiden Enden Antriebswellen aufweist, die an gegenüberliegenden Wänden des Gehäuses gelagert sind. Da die Preise der im Rahmen der Erfindung verwendbaren Servomotoren bei zunehmender Leistung überproportional steigen, kann es dabei zweckmäßig sein, zwei derartige Motoren übereinander anzuordnen.

Weitere Einzelheiten der Erfindung werden anschließend anhand der Zeichnung erläutert. In dieser zeigen:
Fig. 1 bis 5 ein erstes Ausführungsbeispiel, wobei Fig. 1 einen vertikalen Schnitt durch die Längsmittelachse darstellt, Fig. 2 einen horizontalen Schnitt durch die Längsmittelachse, Fig. 3 eine Vorderansicht (zur übersichtlicheren Darstellung sind in Fig. 1 die Kurbeltriebe und in Fig. 2 und 3 die zwischen Motor und Kurbeltrieben angeordneten Getriebe weggelassen sind), Fig. 4 und 5 einen Schnitt nach der Linie B-B in Fig. 1, entsprechend verschiedenen Kurbelstellungen;
Fig. 6 bis 9 entsprechen für ein zweites Ausführungsbeispiel Fig. 1 und 3 bis 5, wobei die Schnittebene für Fig. 8 und 9 um die Kurbeldicke nach außen verschoben ist.
Fig. 10 und 11 sind Vorderansichten von zwei weiteren Ausführungsbeispielen.

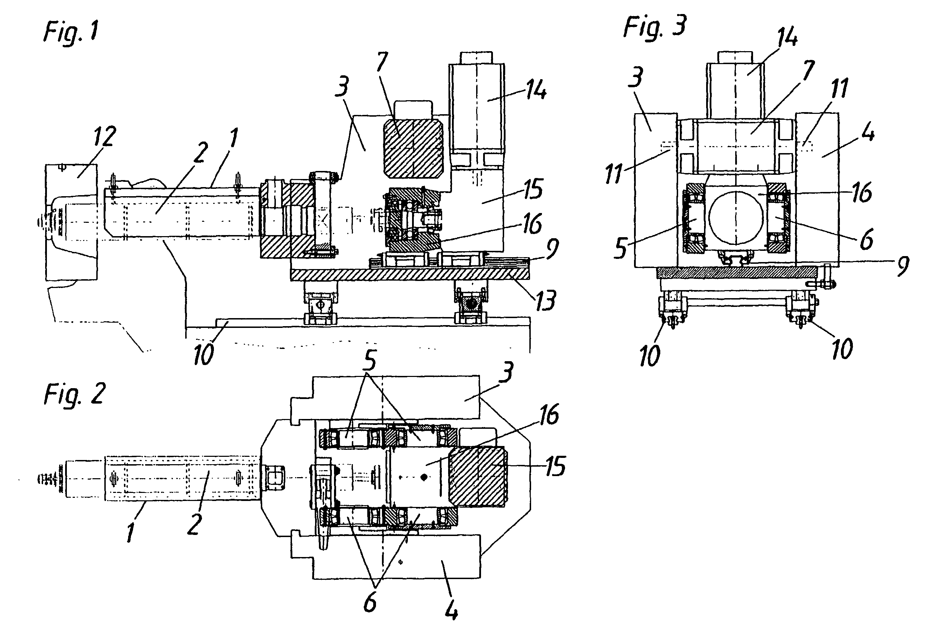

Das Ausführungsbeispiel nach Fig. 1 bis 3 zeigt das Einspritzaggregat einer Spritzgießmaschine. Solche Einspritzaggregate haben den Zweck, mittels der im Plastifizierzylinder 1 gelagerten Plastifizierschnecke 2 zugeführtes Kunststoffgranulat fließfähig zu machen und durch die feststehende Formaufspannplatte 12 in die nicht dargestellte Spritzform zu pressen. Das gesamte Aggregat ist auf Schienen 10 verfahrbar, um den Abstand zur Formaufspannplatte 12 verändern zu können.

Während des Plastifiziervorganges wird die Plastifizierschnecke 2, deren Ende in einem Gehäuse 16 gelagert ist, durch den Motor 14 über ein Winkelgetriebe 15 in Drehung versetzt. Dabei bewegt sie sich zusammen mit dem Motor 14, Winkelgetriebe 15 und Gehäuse 16 nach rechts in Fig. 1. Hiezu sind am Boden 13 eines aus diesem Boden 13 und den Seitenwänden 3 und 4 bestehenden Gehäuses Schienen 9 vorgesehen.

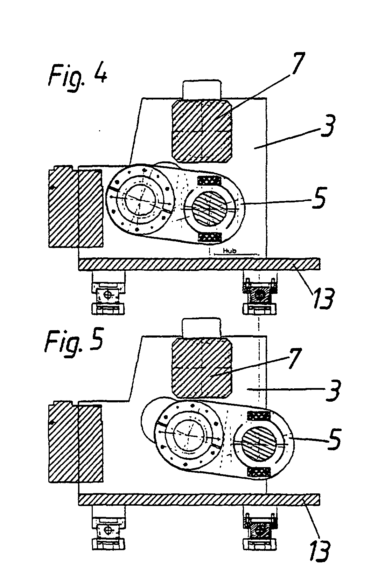

Beim Einspritzvorgang wird die Plastifizierschnecke wie ein Hydraulikkolben verwendet und hiezu auf den Schienen 9 nach links in Fig. 1 verschoben. Zur Durchführung dieser Bewegung ist der das Gehäuse 16 überbrückende Motor vorgesehen, welcher an beiden Enden Antriebswellen 11 aufweist. Diese wirken jeweils auf ein in den Wänden 3 bzw. 4 angeordnetes Getriebe, welches die Kurbeltriebe 5 und 6 betätigt, welche am Gehäuse 16 angreifen. In Fig. 4 und 5 ist der Kurbeltrieb 5 in zwei Stellungen gezeigt, dem Einspritzvorgang entspricht der Übergang von Fig. 5 auf Fig. 4.

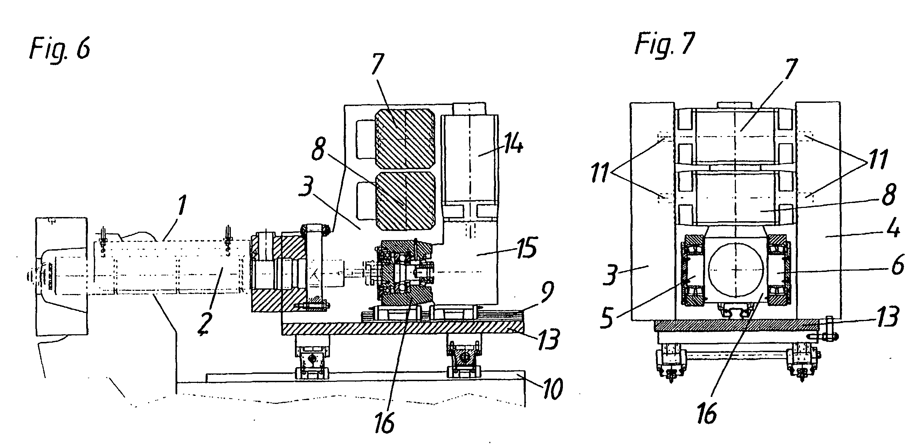

Das Ausführungsbeispiel nach Fig. 6 bis 9 unterscheidet sich vom ersten Ausführungsbeispiel durch die Anordnung eines zweiten Motors 8. Der Vorteil der Verwendung von zwei parallel angeordneten und auf die selben Getriebe wirkenden Motoren 7 und 8 liegt vor allem in einer Kosteneinsparung. Der Preis von Servomotoren steigt nämlich mit zunehmender Leistung überproportional.

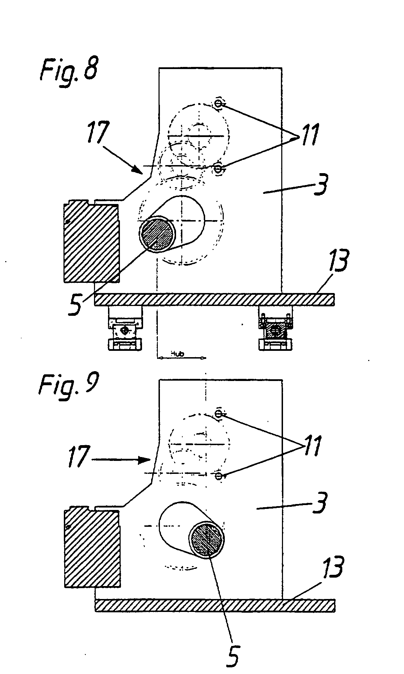

In Fig. 8 und 9 ist das in der Wand 3 angeordnete Getriebe 17 angedeutet, auf welches die Motoren 7 und 8 über die Antriebswellen 11 einwirken, um hiemit die Kurbel 5 zu betätigen.

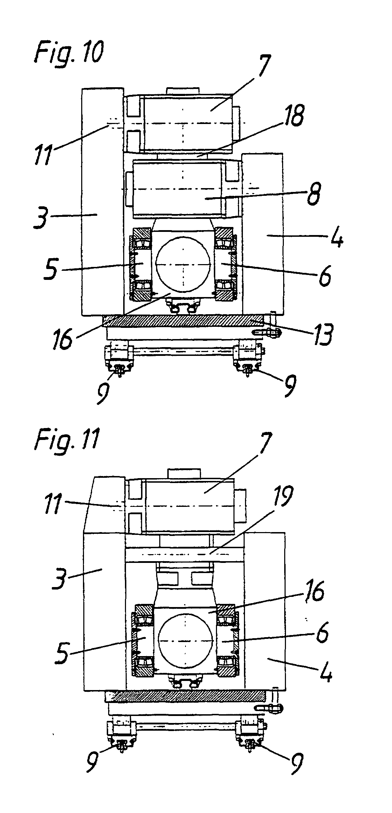

In den ersten beiden Ausführungsbeispielen treibt jeder Motor 7, 8 beide Kurbeln 5, 6 an. Im Rahmen der Erfindung ist es aber auch möglich, jeden Motor nur mit einer der beiden Kurbeln zu verbinden, sofern die Motoren synchronisiert sind. In Fig. 10 und 11 sind zwei derartige Ausführungsbeispiele unter Weglassung der in den Wänden 3 und 4 angeordneten Getriebe dargestellt.

Beim Ausführungsbeispiel nach Fig. 10 treibt der Motor 7 die Kurbel 5 an, der Motor 8 die Kurbel 6. Die Synchronisation der Motoren 7 und 8 erfolgt durch eine sogenannte elektrische Welle 18.

Beim Ausführungsbeispiel nach Fig. 11 ist nur ein Motor 7 vorgesehen, welcher an der Innenseite der Wand 3 befestigt ist. Er treibt den Kurbeltrieb 5 über ein in der Wand 3 angeordnetes Getriebe, den Kurbeltrieb 6 jedoch über die Welle 19 und ein in der Wand 4 vorgesehenes Getriebe an.

## Patentansprüche

1. Einspritzaggregat für eine Spritzgießmaschine mit einem Plastifizierzylinder und einer darin axial verschiebbar angeordneten Plastifizierschnecke, wobei der Plastifizierzylinder mit einem Gehäuse fest verbunden ist, welches an zwei gegenüberliegenden Wänden je einen parallel zur Wand verlaufenden Kurbeltrieb zur Verschiebung der Plastifizierschnecke trägt, welcher von einem an derselben Wand montierten rotierenden Motor angetrieben wird, **dadurch gekennzeichnet, daß** der Motor (7, 8) an wenigstens einer der Wände (3, 4) innen befestigt ist, und die Drehachse des Motors (7, 8) normal zum Kurbeltrieb (5, 6) verläuft.

2. Einspritzaggregat nach Anspruch 1, **dadurch gekennzeichnet, daß** die Kurbeltriebe (5, 6) vertikal verlaufen und daß der Motor (7, 8) oberhalb der Plastifizierschnecke (2) quer zu dieser verläuft.

3. Einspritzaggregat nach einem der Ansprüche 1 oder 2, **dadurch gekennzeichnet, daß** wenigstens ein Motor (7, 8) vorgesehen ist, der an beiden Enden Antriebswellen (11) aufweist, die an gegenüberliegenden Wänden (3, 4) des Gehäuses gelagert sind.

## Claims

1. An injection unit for an injection moulding machine having a plasticising cylinder and a plasticising screw which is axially displaceably arranged therein, wherein the plasticising cylinder is fixedly connected to a housing which at two oppositely disposed walls carries a respective crank drive extending parallel to the wall for displacement of the plasticising screw, the crank drive being driven by a rotating motor mounted to the same wall, **characterised in that** the motor (7, 8) is internally fixed to at least one of the walls (3, 4) and the axis of rotation of the motor (7, 8) extends normal to the crank drive (5, 6).

2. An injection unit according to claim 1 **characterised in that** the crank drives (5, 6) extend vertically and that the motor (7, 8) extends above the plasticising screw (2) in transverse relationship therewith.

3. An injection unit according to one of claims 1 or 2 **characterised in that** there is provided at least one motor (7, 8) which at both ends has drive shafts (11) which are mounted at oppositely disposed walls (3, 4) of the housing.

## Revendications

1. Dispositif d'injection pour une presse d'injection, comprenant un cylindre de plastification et une vis sans fin de plastification disposée dans celui-ci de manière à pouvoir coulisser dans le sens axial, le cylindre de plastification étant assemblé de manière fixe à un boîtier, qui comporte au niveau de deux parois opposées une transmission respective à bielle-manivelle, parallèle à la paroi et destinée à faire coulisser la vis sans fin de plastification, laquelle transmission est actionée par un moteur rotatif monté sur la même paroi, **caractérisé en ce que** le moteur (7, 8) est fixé à au moins l'une des parois (3, 4) du côté intérieur, et l'axe de rotation du moteur (7, 8) s'étend perpendiculairement à la transmission à bielle-manivelle (5, 6).

2. Dispositif d'injection selon la revendication 1, **caractérisé en ce que** les transmissions à bielle-manivelle (5, 6) s'étendent verticalement et **en ce que** le moteur (7, 8) s'étend au-dessus de la vis de plastification (2), perpendiculairement à celle-ci.

3. Dispositif d'injection selon l'une des revendications 1 ou 2, **caractérisé en ce qu'**il est prévu au moins un moteur (7, 8) qui présente aux deux extrémités des arbres d'entraînement (11), qui sont montés à rotation au niveau de parois opposées (3, 4) du boîtier.
